# EUROPEAN PATENT SPECIFICATION

(11) **EP 2 479 158 B1**
(45) Date of publication and mention of the grant of the patent: **06.01.2016**
(21) Application number: 11187716.3
(22) Date of filing: 03.11.2011
(51) Int. Cl.: F24J 2/28, F24J 2/48, F24J 2/07, F24J 2/24, F28D 7/00, C04B 38/00, C04B 35/573

(54) **Method of preparing a silicon carbide honeycomb**
Herstellungsverfahren für Siliciumcarbid-Wabenkörper
Procédé de préparation d'une structure en nid d'abeille au carbure de silicium

(30) Priority: 25.01.2011 KR 20110007485
(43) Date of publication of application: 25.07.2012
(73) Proprietor: Korea Institute of Energy Research, Daejeon 305-343 (KR)
(72) Inventor: Han, In-Sub, 312-942 Chungcheongnam-do (KR); Seo, Doo-Won, 305-720 Daejon (KR); Woo, Sang-kuk, Daejon 305-772 (KR); Kim, Se-Young, 463-947 Gyeonggi-do (KR); Hong, Kee-Seog, 302-798 Daejeon (KR); Yu, Ji-Haeng, 302-318 Daejon (KR); Kim, Sun-Dong, 305-750 Daejon (KR)
(74) Representative: Zimmermann, Tankred Klaus

(56) References cited:
- EP-A2- 2 246 539
- DE-A1-102007 050 195

## Description

### CROSS REFERENCE TO RELATED APPLICATION

This application claims the benefit of Korean Patent Application No. 10-2011-0007485, filed January 25, 2011.

### BACKGROUND OF THE INVENTION

### 1. Technical Field

The present invention relates to a method of preparing a silicon carbide honeycomb.

### 2. Description of the Related Art

A porous honeycomb using a silicon carbide material was first developed to be applied to a diesel particulate filter (DPF) which is a device for reducing the soot from a diesel automobile. The porous honeycomb that uses a silicon carbide material has been mainly manufactured by IBIDEN Co. Ltd. or NGK Insulators Ltd., Japan, and has begun to be commercially produced since 2009 by Khancera Co. Ltd., Korea.

The shape or configuration of a porous silicon carbide honeycomb for a DPF is similar to that of a porous silicon carbide honeycomb for a solar receiver. However, a porous silicon carbide honeycomb for a DPF is different in terms of physical properties (density, porosity, pore size and distribution), mechanical properties (bending strength, compressive strength), thermal properties (thermal conductivity, coefficient of thermal expansion), etc., from those of a porous silicon carbide honeycomb material has a porous matrix phase, and thus exhibits poor mechanical properties and low thermal conductivity, making it impossible to act as a material for a solar receiver.

EP 2 246 539 A2 discloses a method for manufacturing a ceramics heat exchanger in the form of a honeycomb structure comprising the steps of forming a mixture of SiC powder, C powder, binder and water and shaping the mixture to an article. The shaped article is then impregnated with silicon metal. The resulting product is a dense Si - impregnated SiC-body with a honeycomb structure, containing 10 % of silicon metal and exhibiting a porosity of zero or nearly zero.

DE 10 2007 050 195 A1 is directed to a solar receiver that can be in the form of a honeycomb and is made of Si-SiC (silicon impregnated silicon carbide).

### SUMMARY OF THE INVENTION

An aspect of the present invention provides a method of preparing a silicon carbide honeycomb, comprising forming a first mixture comprising silicon carbide and carbon black; vacuum extruding the first mixture, thus forming a second mixture; loading the second mixture into a mold, thus forming a first molded product having a honeycomb shape; drying the first molded product using microwaves, thus forming a second molded product; and reaction sintering the second molded product with metal silicon, thus forming a silicon carbide honeycomb having a porosity of 5% or less but exceeding 0%.

A further aspect of the present invention provides a solar receiver, comprising a silicon carbide honeycomb having a porosity of 5% or less but exceeding 0% and comprising silicon carbide and metal silicon.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a field emission-scanning electron microscope (FE-SEM) image showing the surface of a silicon carbide honeycomb of Example 1; and
FIG. 2 is an FE-SEM image showing the surface of a silicon carbide honeycomb of Comparative Example 1.

### DESCRIPTION OF SPECIFIC EMBODIMENTS

Hereinafter, a detailed description will be given of the present invention.

### I. Silicon Carbide Honeycomb

The silicon carbide honeycomb has a porosity of 5% or less but exceeding 0%, and is composed of silicon carbide and metal silicon. When the porosity falls in the above range, bending strength and compressive strength may become superior. Also, the silicon carbide honeycomb according to the present invention is provided in the form of a hexagonal channel structure, namely, a honeycomb structure, unlike a conventional square channel structure, thereby ensuring a large specific surface area relative to the volume. Thus, the solar receiver applied to the silicon carbide honeycomb, the heat exchanger effectiveness is increased.

The metal silicon is contained in an amount of 10 ∼ 20 wt% based on the total weight of the silicon carbide honeycomb. If the amount of metal silicon is less than 10 wt%, unreacted carbon in the honeycomb may form pores in the atmosphere of actual use of the solar receiver, undesirably deteriorating the mechanical or thermal properties of a final product, namely, the silicon carbide honeycomb. In contrast, if the amount of metal silicon exceeds 20 wt%, metal silicon may be converted into silica (SiO₂) by oxidation in the atmosphere of actual use of the solar receiver, and the silica component may deteriorate the mechanical or thermal properties of a final product, namely, the silicon carbide honeycomb.

### II. Method of Preparing Silicon Carbide Honeycomb

According to the present invention, a method of preparing the silicon carbide honeycomb includes forming a first mixture comprising silicon carbide and carbon black.

The weight ratio of silicon carbide and carbon black is in the range of 80:20 ∼ 70:30. If the amount of carbon black is less than the above lower limit, the amount of the carbon component necessary for producing novel silicon carbide particles by reaction with metal silicon which is melt infiltrated in the course of sintering may be insufficient, undesirably deteriorating mechanical or thermal properties. In contrast, if the amount of carbon black exceeds the above upper limit, unreacted carbon resulting from an incomplete reaction with metal silicon which is melt infiltrated in the course of sintering may remain in the matrix phase. The unreacted carbon may form pores in the final product, undesirably deteriorating mechanical or thermal properties.

Herein, silicon carbide and carbon black may be provided in the form of powder. The average diameter of silicon carbide and carbon black is not particularly limited so long as it is used in the art, and the average diameter of silicon carbide is preferably in the range of 20 - 50 µm, and the average diameter of carbon black is preferably 0.1 µm or less.

In order to facilitate vacuum extrusion which is a post process, the first mixture may further comprise a molding assistant and water. The molding assistant is not particularly limited so long as it is used in the art, but is preferably a cellulose based organic binder.

The cellulose based organic binder may be contained in an amount of 15 ∼ 20 parts by weight based on the total sum, namely, 100 parts by weight, of silicon carbide and carbon black. If the amount of the cellulose based organic binder is less than the above lower limit, the resultant material mixture may be decreased in terms of plasticity and thus may not be discharged through a mold upon extrusion molding. In contrast, if the amount of the cellulose based organic binder exceeds the above upper limit, the resultant material mixture may be remarkably increased in terms of viscosity and thus may attach itself to the inner wall of a mold, and extrusion molding cannot be performed efficiently.

Also, the amount of water is not particularly limited so long as the materials may be sufficiently mixed and the honeycomb shape may be maintained.

The method of preparing the silicon carbide according to the present invention may further comprise aging the first mixture at room temperature for 24 - 48 hours, after forming the first mixture. When the aging process is further included, the molding density of a molded product may become more uniform.

The method of preparing the silicon carbide honeycomb according to the present invention includes vacuum extruding the first mixture thus forming a second mixture. It is preferred that upon vacuum extrusion, the first mixture is kneaded once or twice using a vacuum extruder so that air is removed therefrom, thereby obtaining a desired silicon carbide honeycomb.

The method of preparing the silicon carbide honeycomb according to the present invention includes loading the second mixture into a mold thus forming a first molded product having a honeycomb shape.

Particularly useful is a mold having a honeycomb shape of 100 - 200 CPSI (Channels Per Square Inch), but the present invention is not limited thereto. Furthermore, in the case where the discharge pressure of the vacuum extruder is large, a honeycomb shape of 200 CPSI or more is possible. Moreover, the use of a mold having a hexagonal channel structure is effective at forming a honeycomb shape having a large specific surface area.

The method of preparing the silicon carbide honeycomb according to the present invention includes drying the first molded product using microwaves, thus obtaining a second molded product. Drying the first molded product using microwaves may prevent deformation of the structure, namely, distortion or fracture.

Specifically, drying the first molded product using microwaves may be conducted for 30 - 60 seconds by means of a device using microwaves at a frequency of 2.45 GHz.

The method of preparing the silicon carbide honeycomb according to the present invention includes reaction sintering the second molded product with metal silicon thus forming a silicon carbide honeycomb. As such, the reaction sintering process may be carried out in a vacuum atmosphere.

The reaction sintering process melts the metal silicon so that the molten metal silicon infiltrates the second molded product. Furthermore, the infiltrated metal silicon reacts with carbon in the matrix, namely, carbon black, thus producing novel silicon carbide particles in the matrix (C + Si → SiC). Also, the silicon carbide particles produced by the reaction in the matrix are located between the silicon carbide particles used as the starting material, after which the remaining cavities are occupied with infiltrated metal silicon in a state of free-Si, whereby the second molded product is more densely sintered, resulting in a porosity of 5% or less but exceeding 0%.

The reaction sintering of the second molded product with metal silicon is be performed by reaction sintering 85∼100 parts by weight of metal silicon based on 100 parts by weight of the second molded product, so that metal silicon is contained in an amount of 10 - 20 wt% based on the total weight of a final product. If the amount of contained metal silicon is less than the above lower limit, an insufficient amount of silicon reacts with carbon black, and thereby a large amount of unreacted carbon may remain in the final product. In contrast, if the amount of contained metal silicon exceeds the above upper limit, excessive metal silicon may remain on the inner and outer surfaces of the final product, undesirably causing the mechanical or thermal properties of the silicon carbide honeycomb to be deteriorated due to oxidation.

The reaction sintering may be carried out at 1600 - 1650°C. When the reaction sintering temperature falls in the above range, it is easy to prepare a silicon carbide honeycomb having a dense structure with a porosity of 5% or less but exceeding 0%.

The metal silicon comprises pure metal silicon powder, and particularly to maintain the purity of metal silicon, coarse powder having an average diameter of 1 ∼ 2 mm is preferably used.

The method of preparing the silicon carbide honeycomb according to the present invention may further include performing degreasing, after forming the second molded product. When the degreasing process is further included, the organic binder may be easily removed. The degreasing process may be carried out at an elevated temperature at a heating rate of about 1 °C /min. When the temperature is elevated at the above rate, damage to the molded product due to degreasing may be prevented.

### III. Solar Receiver

According to the present invention, a solar receiver includes the silicon carbide honeycomb having a porosity of 5% or less but exceeding 0% and comprising silicon carbide and metal silicon.

The silicon carbide honeycomb according to the present invention has a large specific surface area with a dense structure having a porosity of 5% or less. Furthermore, the silicon carbide honeycomb according to the present invention has a multi-channel structure, and thus may ensure good contact between a honeycomb solid and a gas which is to be heat exchanged. Hence, the gas which is to be heat exchanged may pass through the honeycomb without any pressure loss. The silicon carbide honeycomb according to the present invention has very thin walls of 1 mm or less, which constitute the matrix phase thereof. For this reason, the gas which flows in the honeycomb may pass therethrough without resistance from the walls, resulting in low pressure loss, high gas flow rate, and increased material transfer performance. Because the silicon carbide honeycomb according to the present invention has a dense matrix phase, it is superior in terms of sintering density, mechanical properties, thermal properties, etc.

The following examples are set forth to illustrate but are not to be construed as limiting the present invention, in order to improve the understanding of the present invention, and may be appropriately modified and varied by those skilled in the art within the scope of the present invention.

### Example 1: Preparation of Silicon Carbide Honeycomb

1 kg of a first mixture was formed using a composition of Example 1 shown in Table 1 below.

Subsequently, the first mixture was vacuum extruded thus forming a second mixture. More specifically, it was preferred that upon vacuum extrusion, the first mixture was kneaded once using a vacuum extruder (FM-70-1, available from Miyazaki, Japan) so that air was removed therefrom, thereby preparing a honeycomb. After completion of removal of the air, a mold having a hexagonal channel structure was mounted to the discharge part of the extruder, and the material mixture was supplied at a predetermined rate, thus obtaining a honeycomb shape under conditions in which the material mixture was continuously discharged.

Subsequently, the second mixture was loaded into a mold, thus forming a first molded product. Subsequently, the first molded product was dried in steps until it was completely dewatered for 36 seconds by means of a dryer using microwaves at a frequency of 2.45 GHz, thus forming a second molded product, which was then reaction sintered.

Specifically, the second molded product was mixed with 850 g of metal silicon and then reaction sintered. As such, the reaction sintering was conducted in the temperature range from room temperature to 1650°C at a heating rate of 1 °C /min from room temperature to 600 °C and a heating rate of 5°C/min from 600 °C to 1650 °C, in a vacuum atmosphere of 0.1 mmHg.

### Example 2: Preparation of Silicon Carbide Honeycomb

The present example was conducted in the same manner as in Example 1, with the exception that 1 kg of a first mixture was formed using a composition of Example 2 shown in Table 1 below in lieu of the composition of Example 1, and 900 g, not 850 g, of metal silicon was used for reaction sintering.

**TABLE 1**

| | Ex. 1 (wt%) | Ex. 2 (wt%) |
|---|---|---|
| Silicon Carbide | 60 | 53 |
| Carbon Black | 15 | 22 |
| Cellulose based organic binder | 10 | 10 |
| Water | 15 | 15 |
| average diameter of silicon carbide: 44 µm | | |
| average diameter of carbon black: 0.07 µm | | |
| cellulose based organic binder: HUM-SC-E1(available from Humix) | | |

### Comparative Example 1: Silicon Carbide Honeycomb

A silicon carbide honeycomb for a DPF (available from Khancera Co. Ltd.) was used.

### Test Example: Evaluation of Properties of Silicon Carbide Honeycomb

### <Measurement of Sintering Density and Porosity>

The silicon carbide honeycombs of Examples 1 and 2 and Comparative Example 1 were processed to 10 mm × 10 mm × 10mm, and respective samples were boiled in water for 3 hours, after which sintering density and porosity thereof were calculated by means of the Archimedes method using a suspended weight, a saturated weight, and a dried weight.

### <Measurement of Bending Strength>

Bending strength was measured using a universal testing machine (S-series, Houndsfield, U.K.) according to 3-point bending test. A filter support sintered in a tube shape was cut to a size of 3 mm × 5 mm × 45 mm so as to be 3-point bending tested, and respective corners were beveled, and upon measurement of the strength, a cross head speed was 0.1 mm/min.

**TABLE 2**

| | Sintering Density (g/cm³) | Porosity (%) | Room-temperature 3-point Bending Strength (MPa) |
|---|---|---|---|
| Ex.1 | 2.89∼2.95 | 2-5 | 200∼320 |
| Ex.2 | 2.95-3.05 | 2-5 | 220∼330 |
| C.Ex.1 | 1.4∼2.00 | 40∼50 | 10∼15 |

As is apparent from Table 2, the silicon carbide of Examples 1 and 2 according to the present invention had higher sintering density, superior bending strength and lower porosity compared to those of Comparative Example 1. Unlike a material for a DPF, the honeycomb prepared according to the present invention has a matrix phase that is densely reaction sintered to a porosity of 5% or less, thus attaining high sintering density and bending strength.

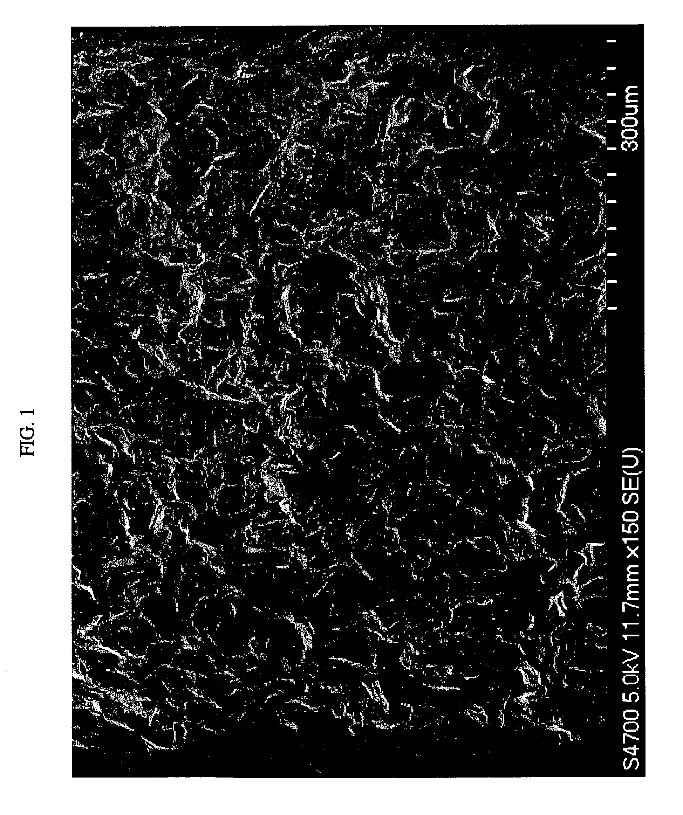

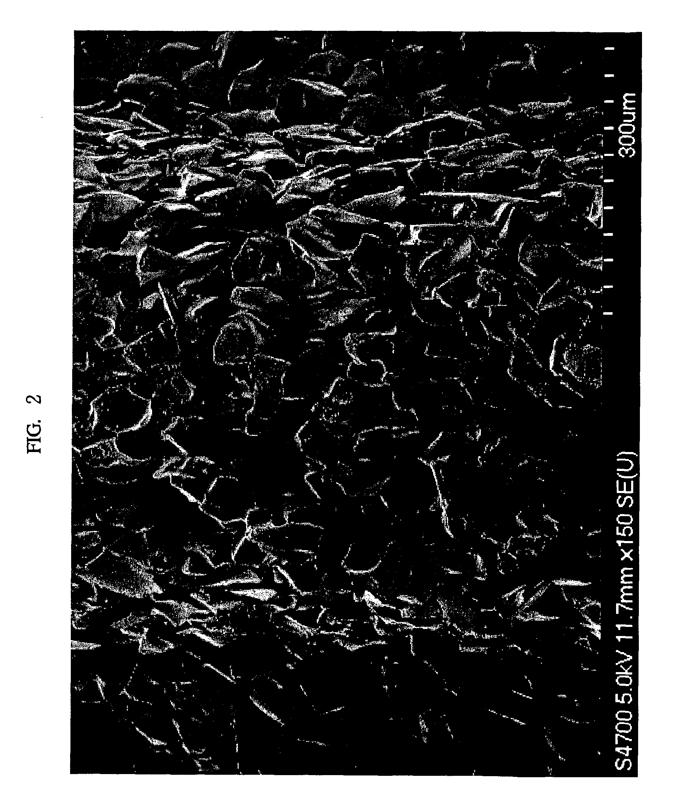

FIG. 1 is an FE-SEM image showing the surface of the silicon carbide honeycomb of Example 1, and FIG. 2 is an FE-SEM image showing the surface of the silicon carbide honeycomb of Comparative Example 1.

With referring to FIGS. 1 and 2, the silicon carbide honeycomb of Example 1 had a very dense structure.

As described hereinbefore, the present invention provides a silicon carbide honeycomb and a method of preparing the same. According to the present invention, the silicon carbide honeycomb has a large specific surface area with a dense structure having a porosity of 5% or less. Furthermore, because the silicon carbide honeycomb according to the present invention has a multi-channel structure, contact between a honeycomb solid and a gas which is to be heat exchanged is good. The gas that is to be heat exchanged can pass through the silicon carbide honeycomb without any pressure loss.

In the silicon carbide honeycomb according to the present invention, walls which constitute the matrix phase of the honeycomb are very thin to the extent of 1 mm or less. Hence, a gas which flows in the honeycomb can pass therethrough without resistance from the walls, resulting in low pressure loss, high gas flow rate, and increased material transfer performance. The matrix phase of the silicon carbide honeycomb according to the present invention is made dense, thus exhibiting superior sintering density, mechanical properties, thermal properties, etc.

Although various aspects and embodiments of the present invention have been disclosed for illustrative purposes, those skilled in the art will appreciate that various modifications, additions, and substitutions are possible, without departing from the scope of the invention as disclosed in the accompanying claims.

## Claims

1. A method of preparing a silicon carbide honeycomb comprising:
forming a first mixture comprising silicon carbide and carbon black;
vacuum extruding the first mixture, thus forming a second mixture;
loading the second mixture into a mold, thus forming a first molded product having a honeycomb shape;
drying the first molded product using microwaves, thus forming a second molded product; and
reaction sintering the second molded product with metal silicon, thus forming a silicon carbide honeycomb having a porosity of 5% or less but exceeding 0%,
wherein in the first mixture, the silicon carbide and the carbon black are contained in a weight ratio of 70:30 ∼ 80:20, and
wherein the reaction sintering the second molded product with metal silicon thus forming the silicon carbide honeycomb is performed by reaction sintering 85 ∼ 100 parts by weight of the metal silicon based on 100 parts by weight of the second molded product to form the silicon carbide honeycomb.

2. The method of claim 1, **characterized in that** the first mixture further comprises a cellulose based organic binder and water.

3. The method of claim 1, further comprising aging the first mixture at room temperature for 24 ∼ 48 hours, after forming the first mixture.

4. The method of claim 1, **characterized in that** the mold has a honeycomb shape of 100 ∼ 200 CPSI (Channels Per Square Inch).

5. The method of claim 1, **characterized in that** the drying the first molded product using microwaves thus forming the second molded product is performed for 30 ∼ 60 seconds by means of a device using microwaves at a frequency of 2.45 GHz.

6. The method of claim 1, further comprising performing degreasing, after forming the second molded product.

7. The method of claim 1, **characterized in that** the reaction sintering the second molded product with metal silicon thus forming the silicon carbide honeycomb is performed at 1600 ∼ 650 °C.

8. The method of claim 1, **characterized in that** the silicon carbide honeycomb is for a solar receiver.

## Patentansprüche

1. Ein Verfahren zum Herstellen einer Siliziumkarbid-Wabe, das folgende Schritte aufweist:
Bilden einer ersten Mischung mit Siliziumkarbid und Kohleschwarz;
Vakuum-Extrudieren der ersten Mischung, was eine zweite Mischung bildet;
Laden der zweiten Mischung in eine Form, was ein erstes geformtes Produkt mit einer Wabenform bildet;
Trocknen des ersten geformten Produkts unter Verwendung von Mikrowellen, was ein zweites geformtes Produkt bildet; und
Reaktionssintern des zweiten geformten Produkts mit Metallsilizium, was eine Siliziumkarbid-Wabe mit einer Porosität von 5% oder weniger, jedoch über 0%, bildet,
wobei in der ersten Mischung das Siliziumkarbid und das Kohleschwarz in einem Gewichtsverhältnis von 70:30 ∼ 80:20 beinhaltet sind, und
wobei das Reaktionssintern des zweiten geformten Produkts mit Metallsilizium, was die Siliziumkarbid-Wabe bildet, durch Reaktionssintern von 85 ∼ 100 Gewichtsteilen des Metallsiliziums basierend auf 100 Gewichtsteilen des zweiten geformten Produkts durchgeführt wird, um die Siliziumkarbid-Wabe zu bilden.

2. Das Verfahren gemäß Anspruch 1, das **dadurch gekennzeichnet ist, dass** die erste Mischung ferner ein organisches Bindemittel auf Zellulosebasis und Wasser aufweist.

3. Das Verfahren gemäß Anspruch 1, das ferner ein Altern der ersten Mischung bei Raumtemperatur für 24 ∼ 48 Stunden, nachdem die erste Mischung gebildet ist, aufweist.

4. Das Verfahren gemäß Anspruch 1, das **dadurch gekennzeichnet ist, dass** die Form eine Wabenform mit 100∼200 CPSI (Kanälen pro Quadratzoll) aufweist.

5. Das Verfahren gemäß Anspruch 1, das **dadurch gekennzeichnet ist, dass** das Trocknen des ersten geformten Produkts unter Verwendung von Mikrowellen, was das zweite geformte Produkt bildet, 30 ∼ 60 Sekunden lang mittels einer Vorrichtung unter Verwendung von Mikrowellen mit einer Frequenz von 2,45 GHz durchgeführt wird.

6. Das Verfahren gemäß Anspruch 1, das ferner ein Durchführen eines Entfettens, nachdem das zweite geformte Produkt gebildet ist, aufweist.

7. Das Verfahren gemäß Anspruch 1, das **dadurch gekennzeichnet ist, dass** das Reaktionssintern des zweiten geformten Produkts mit Metallsilizium, was die Siliziumkarbid-Wabe bildet, bei 1600 ∼ 1650°C durchgeführt wird.

8. Das Verfahren gemäß Anspruch 1, das **dadurch gekennzeichnet ist, dass** die Siliziumkarbid-Wabe für einen Solar-Empfänger ist.

## Revendications

1. Procédé de préparation d'une structure en nid d'abeille au carbure de silicium, comprenant le fait de:
former un premier mélange comprenant du carbure de silicium et du noir de carbone;
extruder sous vide le premier mélange, formant ainsi un deuxième mélange;
charger le deuxième mélange dans un moule, formant ainsi un premier produit moulé présentant une forme en nid d'abeilles;
sécher le premier produit moulé à l'aide de micro-ondes, formant ainsi un deuxième produit moulé; et
fritter par réaction le deuxième produit moulé avec du silicium métallique, formant ainsi une structure en nid d'abeille au carbure de silicium présentant une porosité de 5% ou moins, mais supérieure à 0%,
dans lequel, dans le premier mélange, le carbure de silicium et le noir de carbone sont contenus selon un rapport en poids de 70:30 ∼ 80:20, et
dans lequel le frittage par réaction du deuxième produit moulé avec du silicium métallique, formant ainsi la structure en nid d'abeille au carbure de silicium, est réalisé par frittage par réaction de 85 ∼ 100 parts en poids du silicium métallique sur base de 100 parts en poids du deuxième produit moulé, pour former la structure en nid d'abeille au carbure de silicium.

2. Procédé selon la revendication 1, **caractérisé par le fait que** le premier mélange comprend par ailleurs un liant organique à base de cellulose et de l'eau.

3. Procédé selon la revendication 1, comprenant par ailleurs le fait de laisser vieillir le premier mélange à température ambiante pendant de 24 ∼ 48 heures, après formation du premier mélange.

4. Procédé selon la revendication 1, **caractérisé par le fait que** le moule présente une forme en nid d'abeilles de 100 ∼ 200 CPSI (canaux par pouce carré).

5. Procédé selon la revendication 1, **caractérisé par le fait que** le séchage du premier produit moulé à l'aide de micro-ondes, formant ainsi le deuxième produit moulé, est effectué pendant de 30 ∼ 60 secondes au moyen d'un dispositif utilisant des micro-ondes à une fréquence de 2,45 GHz.

6. Procédé selon la revendication 1, comprenant par ailleurs le fait de réaliser un dégraissage, après formation du deuxième produit moulé.

7. Procédé selon la revendication 1, **caractérisé par le fait que** le frittage par réaction du deuxième produit moulé avec du silicium métallique, formant ainsi la structure en nid d'abeille au carbure de silicium, est réalisé à de 1600 ∼ 1650°C.

8. Procédé selon la revendication 1, **caractérisé par le fait que** la structure en nid d'abeille au carbure de silicium est destinée à un récepteur solaire.
